# EUROPEAN PATENT SPECIFICATION

(11) **EP 0 650 282 B1**
(45) Date of publication and mention of the grant of the patent: **24.10.2001**
(21) Application number: 94306742.1
(22) Date of filing: 14.09.1994
(51) Int. Cl.: H04M 1/02

(54) **Automatic telescopic antenna mechanism**
Automatischer Teleskopantennenmechanismus
Mécanisme automatique pour des antennes téléscopiques

(30) Priority: 23.09.1993 US 125577; 23.09.1993 US 125578
(43) Date of publication of application: 26.04.1995
(73) Proprietor: AT&T Corp., New York, NY 10013-2412 (US)
(72) Inventor: Gerszberg, Irwin, Kendall Park, New Jersey 08824 (US); Graule, Norman P., Hackettstown, New Jersey 07840 (US); Kendig, Eugene Thomas, Brick, New Jersey 08724 (US)
(74) Representative: Johnston, Kenneth Graham

(56) References cited:
- EP-A- 0 508 299
- WO-A-92/16980
- WO-A-93/01659
- FR-A- 2 679 086

## Description

### Field of the Invention

This invention relates to antennas, particularly to antennas for use on radiotelephone handsets, and most particularly to mechanisms for the automatic deployment and retraction of antennas for use on radiotelephone handsets.

### Description of the Related Art

Radiotelephone handsets are becoming quite ubiquitous, particularly in the form of portable cellular telephones. Such a telephone typically has a retractable mouthpiece and a retractable antenna so that the telephone is as compact as possible when not in use, enabling it to be carried conveniently.

To use such a telephone, a user must deploy the mouthpiece and deploy the antenna. If a user has his hands full or is preoccupied he may perform these operations in a slipshod manner, thus using the telephone with the antenna partially or completely retracted.

As is known in the prior art, such telephones are capable of operating at several different power levels, and of adjusting themselves to operate at the lowest feasible power level in order to conserve battery power. If the telephone is used with its antenna not fully deployed it may be forced to adjust itself to operate at a higher power level than necessary, thus increasing battery drain. Also, such operation may shorten the life of internal components by causing them to operate under strenuous conditions.

Such telephones are often subjected to rough handling. A user may neglect to retract the antenna when he finishes using the telephone; subsequent rough handling may damage or break the antenna.

The reader is referred to WO-A-93 01659.

According to the present invention, there is provided a radio telephone handset as defined in claim 1.

It is a general object of the present invention to provide improved radiotelephones.

It is a particular object of the present invention to provide a radiotelephone having a retractable mouthpiece and a retractable antenna with a mechanism coupling the mouthpiece to the antenna for automatically deploying the antenna when the mouthpiece is deployed.

In one embodiment of the present invention there is provided a cellular telephone where the microphone is on a mouthpiece which is slidably mounted on the body of the telephone; in order to use the telephone a user must slide the mouthpiece down the body, thus establishing an appropriate relative position between the speaker and the microphone and exposing a keypad located on the body of the telephone. The antenna is of the telescopic type, with a rod-type antenna plunger slidably installed in a hollow cylindrical antenna channel. Abutting the lower end of the antenna plunger is a length of flexible gear strip which emerges from the end of the antenna channel opposite to the end into which the antenna plunger retracts; a gear is engaged with the flexible gear strip; the slidable mouthpiece is equipped with teeth also engaging the gear; the sliding open of the mouthpiece thus rotates the gear so as to drive the flexible gear strip upward into the antenna channel, thus deploying the antenna plunger upward. Conversely, sliding the mouthpiece closed retracts the antenna plunger.

In another embodiment of the present invention there is provided a cellular telephone of the "flip-open" type, where the microphone is on a mouthpiece which is hinged to the body of the telephone, the hinge typically being toward an end of the body. In order to use the telephone a user must "flip-open" the mouthpiece, thus exposing the microphone located on the mouthpiece and a keypad located on the body of the telephone. The antenna is of the telescopic type, with a rodlike antenna plunger slidably installed in a hollow antenna channel. Butted to the lower end of the antenna plunger is a flexible member which emerges from the end of the antenna channel opposite to the end into which the antenna plunger retracts, and which is fastened to the flip-open mouthpiece in such manner that opening the mouthpiece pushes the flexible member into the antenna channel thus pushing up the antenna plunger, and closing the mouthpiece pulls the flexible member out of the antenna channel thus retracting the antenna plunger.

### Brief Description of the Drawings

Figure 1 is a view of a telephone handset of one embodiment of the present invention;
Figure 2 shows a detail of the telescopic antenna of Fig. 1;
Figure 3 is a cutaway view of a telephone handset of another embodiment of the present invention; and
Figure 4 is a sectional view showing detail of the telescopic antenna of Fig. 3.

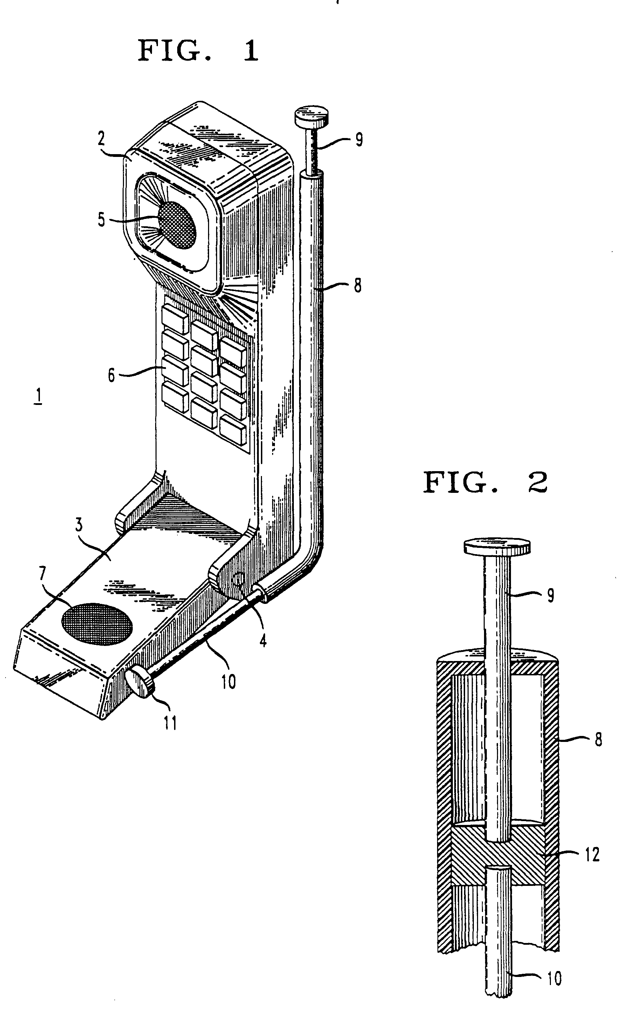

With reference to Figure 1, a radiotelephone handset 1 comprises a body 2 with a flip-open mouthpiece 3 hinged to the body along an axis 4. The body contains speaker 5 for use against a user's ear and a keypad 6. Keypad 6 is preferably covered when hinged mouthpiece 3 is closed. Hinged mouthpiece 3 contains a microphone 7. A rod-type antenna plunger 9 is retractable into the upper end of tubular antenna channel 8 which is fastened to body 2.

In order to use handset 1 a user must open hinged mouthpiece 3, thus configuring handset 1 such that speaker 5 may be proximate to a user's ear and microphone 7 may be simultaneously proximate to her mouth. Also, the user must ensure that the antenna plunger is extended.

In handsets of the prior art the antenna plunger must be extended manually; nothing precludes extending it only partially, or using the handset without extending the antenna plunger at all. It is known in the prior art that the handset may operate at any of several power levels and that it adjusts its power level to the lowest level for current conditions; if the antenna plunger is only partially extended or not extended at all, the handset will probably have to operate at a higher power level than if the antenna plunger were fully extended, increasing power consumption and component stress.

Similarly, it is incumbent on the user of prior-art handsets to retract the antenna plunger upon completing use of the handset; it is possible to neglect retraction of the antenna plunger in which case the antenna plunger is exposed to the possibility of damage in the event of subsequent rough handling of the handset.

The handset of the said one embodiment automatically extends antenna plunger 9 when hinged mouthpiece 3 is opened, and automatically retracts antenna plunger 9 when hinged mouthpiece 3 is closed.

Antenna plunger 9 is substantially shorter than antenna channel 8; antenna channel 8 is curved at its bottom, and spring steel wire 10 protrudes from the curved lower end of antenna channel 8, with its upper end fastened to the bottom of antenna plunger 9. Wire 10 is covered with insulation. The outer end of wire 10 is fastened to mouthpiece 3 at attachment point 11. Antenna channel 8 and attachment point 11 may be configured so that the act of opening mouthpiece 3 causes wire 10 to be pushed into the lower end of antenna channel 8, thus pushing up antenna plunger 9. The curvature of antenna channel 8 contains wire 10 in substantially the same curvature it would have if it were free and unstressed; when wire 10 is stressed by opening or closing of the mouthpiece antenna channel 8 confines wire 10 so that it is not free to buckle laterally.

In the preferred embodiment the path of wire 10 is outside of axis 4. (i.e., The radius from attachment point 11 to the point of maximum curvature in wire 10 is greater than the radius from attachment point 11 to axis 4.) If the path were inside of axis 4, opening mouthpiece 3 would have the adverse effect of pulling wire 10 out of antenna channel 8; if the path traversed axis 4, opening mouthpiece 3 would neither push nor pull wire 10.

The handset can thus be manufactured with a particular desired amount of antenna plunger extension as determined by the distance from axis 4 to antenna channel 8 and the position of attachment point 11. The handset of the preferred embodiment is for use at radio frequencies of 900 MHz. and 1.8 GHz.; power transfer considerations dictate that the antenna plunger must be extended approximately two inches.

Further detail is given in Figure 2, which depicts the upper portion of antenna channel 8 as being sectioned by a plane that includes antenna channel 8's axis. Antenna plunger 9 and wire 10, both visible in Figure 1, are shown unsectioned in Figure 2. Figure 2 also shows coupler 12, not visible in Figure 1; coupler 12 is shown as being sectioned by the aforementioned plane. Coupler 12 is fastened to the lower end of antenna plunger 9 and the upper end of wire 10. Coupler 12 is made of dielectric material; thus it couples antenna plunger 9 and wire 10 together mechanically but keeps them electrically discontinuous. Wire 10, being covered with insulation, does not make electrical contact with antenna channel 8, even though it may have points of physical contact with antenna channel 8. Coupler 12 is of such diameter as to be freely slidable within antenna channel 8.

The upward push imparted to wire 10 by opening mouthpiece 3 thus results in extending antenna plunger 9 from antenna channel 8; the downward pull exerted on wire 10 by closing mouthpiece 3 thus results in retracting antenna plunger 9 into antenna channel 8.

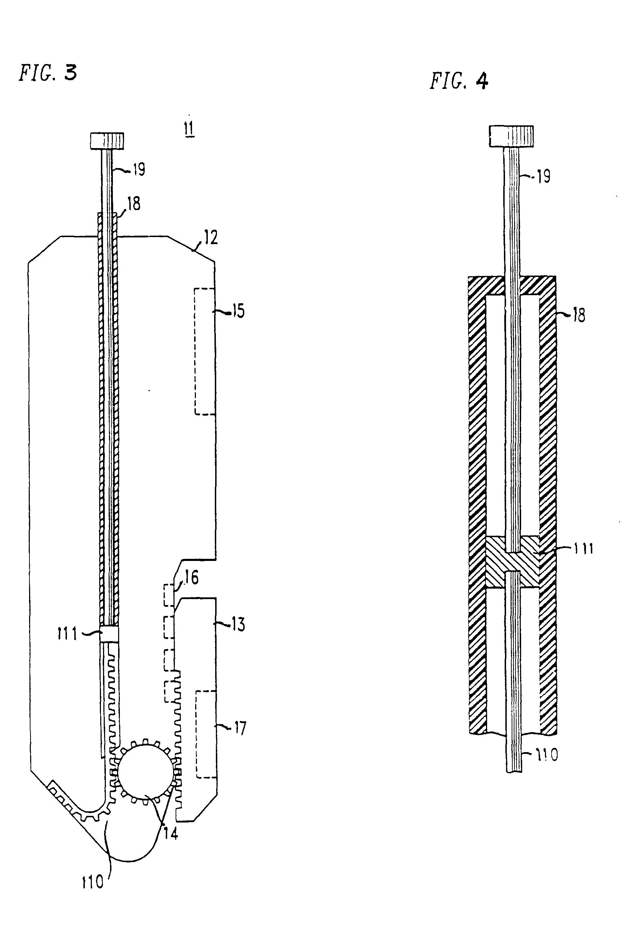

In the embodiment described in Figure 3, a radiotelephone handset 11 comprises a body 12 with a mouthpiece 13 slidably mounted on or relative to the body. The body contains speaker 15 for use against a user's ear and a keypad 16. Keypad 16 is covered when mouthpiece 13 is closed. Mouthpiece 13 contains a microphone 17, positioned on the face of mouthpiece 13. A rod-type antenna plunger 19 is retractable into the upper end of tubular antenna channel 18 which is incorporated in body 12.

In order to use handset 11, a user must slide open mouthpiece 13, thus configuring handset 11 such that speaker 15 may be proximate to a user's ear and microphone 17 may be simultaneously proximate to her mouth. Also, the user must ensure that the antenna plunger is extended.

The handset of the present invention automatically extends antenna plunger 19 when mouthpiece 13 is opened, and automatically retracts antenna plunger 19 when mouthpiece 13 is closed.

Mouthpiece 13 has teeth comprising a rack (as in the term "rack and pinion") on the face adjacent to body 12; a slot in body 12 exposes teeth of pinion 14; the teeth of mouthpiece 13 engage the teeth of pinion 14, mouthpiece 13 and pinion 14 thus functioning as a rack and pinion.

Antenna plunger 19 is installed within antenna channel 18; fastened to its lower end by means of coupler 111 is flexible gear strip 110. Gear strip 110's teeth engage those of pinion 14.

It is seen from Figure 3 that deploying mouthpiece 13 by sliding it downwards causes pinion 14 to rotate in the clockwise direction; this pushes gear strip 110 upwards. Gear strip 110 is sufficiently confined within antenna channel 18 that it is prevented from buckling laterally; it thus transmits upward force to coupler 111, thence to antenna plunger 19, deploying it upwards.

Conversely, sliding mouthpiece 13 upwards causes pinion 14 to rotate counter-clockwise, which pulls gear strip 110 downward, thus retracting antenna plunger 19. The lower end of gear strip 110 contacts the bottom of body 12 and is deflected back upward and is thus stored within body 12.

The handset of the preferred embodiment is for use at radio frequencies of 900 MHz. and 1.8 GHz.; antenna matching considerations dictate that the antenna plunger must be extended approximately two inches. Antenna plunger 19 is electrically continuous with antenna channel 18; the two together comprise the handset's antenna.

Further detail is given in Figure 4, which depicts the upper portion of antenna channel 18 as being sectioned by a plane that includes antenna channel 18's axis. Antenna plunger 19 and gearstrip 110, both visible in Figure 3, are shown unsectioned in Figure 4. Figure 4 also shows coupler 111 as being sectioned by the aforementioned plane. Coupler 111 is fastened to the lower end of antenna plunger 19 and the upper end of gearstrip 110. Coupler 111 is made of dielectric material; thus it couples antenna plunger 19 and gearstrip 110 together mechanically but keeps them electrically discontinuous. Gearstrip 110 is of dielectric material and thus does not electrically become a portion of the antenna even though it may have points of contact with antenna channel 18. Coupler 111 is of such diameter as to be freely slidable within antenna channel 18.

The lower end of antenna channel 18 is proximate to pinion 14. Antenna channel 18 is of such diameter that gearstrip 110 may freely enter it, but antenna channel 18 is not substantially larger than gearstrip 110's cross-section. Gearstrip 110, though flexible, is thus confined by antenna channel 18 from buckling laterally when transmitting force to push up antenna plunger 19.

It will be appreciated that conversely, pulling to extend the antenna in both of these embodiments, will move the mouthpiece to the operative positions.

## Claims

1. A radiotelephone handset (1) of the type having a mouthpiece (3) movable relative to a body (2) of the handset (1), **characterised by**:
an antenna (9) slidably movable within a channel (8) associated with the body (2); and
a mechanical coupling (11) between the mouthpiece (3) and the antenna (9) responsive to the movement of the mouthpiece (3) relative to the body (2) to cause the antenna (9) to move within the channel (8).

2. A handset (1) according to claim 1, wherein
the mouthpiece (3) is hinged to the body (2), and wherein the mechanical coupling (11) is responsive to a user's act of opening and/or closings of the hinged mouthpiece (3).

3. A handset (1) according to claim 2, wherein a flexible wirelike member (10) has one end slidably inserted in the second end of said channel (8), has the said one end fastened to the antenna (9), and has the other end of the member (10) protruding from the channel (8) and fastened to the mouthpiece (3).

4. A handset (1) according to claim 3, wherein the antenna channel (8) is curved near its second end with substantially the same curvative as the wirelike member (10) would have if it were free and in an unstressed condition, whereby the member (10) is confined by the channel (8) from buckling when stressed by opening of the mouthpiece (3).

5. A handset (1) according to claim 1, wherein the mouthpiece (3) is slidably mounted to the body (2), and wherein the mechanical coupling (11 ) is responsive to the user's act of sliding the mouthpiece (3) relative to the body (2).

6. A handset (1) according to claim 5, wherein the mechanical coupling (11) comprises a pinion (14) rotatably mounted in the body (2), a first rack on a part of the mouthpiece (3) adjacent to the body (2) and in engagement with the pinion (14), and a second rack (110) in engagement with the pinion (14) and fixed relative to the antenna (9).

7. A handset (1) according to claim 6, wherein the second rack (110) is flexible and enters one end of the said channel (8), and wherein the said one end is adjacent to the pinion (14) whereby the second rack (110) is confined by the channel (8) to prevent buckling of the second rack (110).

8. A handset (1) according to any one preceding claim, wherein the channel (8) is tubular and fastened to the body (2), and the antenna (9) is rodlike and slidably mounted within one end of the tubular channel (8).

## Patentansprüche

1. Funktelefonhörer (1) in der Ausführung mit einem im Verhältnis zu einem Körper (2) des Hörers (1) bewegbaren Mundstück (3), **gekennzeichnet durch**:
eine innerhalb eines zum Körper (2) gehörenden Kanals (8) verschiebbar bewegbare Antenne (9); und
eine zwischen dem Mundstück (3) und der Antenne (9) befindliche mechanische Kupplung (11), die auf die Bewegung des Mundstücks (3) im Verhältnis zum Körper (2) reagiert, um eine Bewegung der Antenne (9) innerhalb des Kanals (8) zu bewirken.

2. Hörer (1) nach Anspruch 1, bei dem das Mundstück (3) schwenkbar mit dem Körper (2) verbunden ist, und bei dem die mechanische Kupplung (11) auf vom Benutzer durchgeführtes Öffnen und/oder Schließen des schwenkbaren Mundstücks (3) reagiert.

3. Hörer (1) nach Anspruch 2, bei dem ein flexibles drahtähnliches Element (10) mit einem Ende verschiebbar in das zweite Ende des Kanals (8) eingeführt ist, das eine Ende an der Antenne (9) befestigt ist und das andere Ende des Elements (10) aus dem Kanal (8) herausragt und am Mundstück (3) befestigt ist.

4. Hörer (1) nach Anspruch 3, bei dem der Antennenkanal (8) in der Nähe seines zweiten Endes im wesentlichen die gleiche Biegung aufweist, die das drahtähnliche Element (10) in einem freien und unbeanspruchten Zustand aufweisen würde, so daß der Kanal (8) ein Verformen des Elements (10) verhindert, wenn es durch Öffnen des Mundstücks (3) beansprucht wird.

5. Hörer (1) nach Anspruch 1, bei dem das Mundstück (3) verschiebbar am Körper (2) montiert ist, und bei dem die mechanische Kupplung (11) auf vom Benutzer durchgeführtes Verschieben des Mundstücks (3) im Verhältnis zum Körper (2) reagiert.

6. Hörer (1) nach Anspruch 5, bei dem die mechanische Kupplung (11) ein drehbar im Körper (2) montiertes Ritzel (14), eine an einem Teil des Mundstücks (3) direkt an den Körper (2) angrenzend angeordnete erste Zahnstange, die in das Ritzel (14) eingreift, und eine zweite Zahnstange (110), die in das Ritzel (14) eingreift und im Verhältnis zur Antenne (9) fixiert ist, umfaßt.

7. Hörer (1) nach Anspruch 6, bei dem die zweite Zahnstange (110) flexibel ist und in ein Ende des Kanals (8) eintritt, und bei dem das eine Ende direkt angrenzend an das Ritzel (14) angeordnet ist, so daß die zweite Zahnstange (110) durch den Kanal (8) eingeschränkt ist, um ein Verformen der zweiten Zahnstange (110) zu verhindern.

8. Hörer (1) nach einem der vorstehend genannten Ansprüche, bei dem der Kanal (8) rohrförmig und am Körper (2) befestigt ist, und bei dem die Antenne (9) stabförmig und verschiebbar innerhalb eines Endes des rohrförmigen Kanals (8) montiert ist.

## Revendications

1. Combiné radiotéléphonique (1) du type doté d'une embouchure (3) mobile par rapport à un corps (2) du combiné (1), **caractérisé par** :
une antenne (9) mobile coulissante à l'intérieur d'un canal (8) associé au corps (2) ; et
un couplage mécanique (11) entre l'embouchure (3) et l'antenne (9) réagissant au mouvement de l'embouchure (3) par rapport au corps (2) por provoquer le mouvement de l'antenne (9) à l'intérieur du canal (8).

2. Combiné (1) selon la revendication 1, dans lequel
l'embouchure (3) est articulée sur le corps (2), et dans lequel le couplage mécanique (11) réagit à des gestes d'un utilisateur visant à ouvrir et/ou à fermer l'embouchure articulée (3).

3. Combiné (1) selon la revendication 2, dans lequel un élément souple de type fil (10) présente une extrémité insérée coulissante dans la deuxième extrémité dudit canal (8), a ladite une extrémité fixée à l'antenne (9) et a l'autre extrémité de l'élément (10) faisant saillie du canal (8) et fixée à l'embouchure (3).

4. Combiné (1) selon la revendication 3, dans lequel le canal (8) de l'antenne est recourbé à proximité de sa deuxième extrémité essentiellement suivant la même courbure que l'élément de type fil (10) adopterait s'il était libre et dans un état non sollicité, de sorte que l'élément (10) est confiné par le canal (8) pour éviter qu'il ne se cambre lorsqu'il est sollicité suite à l'ouverture de l'embouchure (3).

5. Combiné (1) selon la revendication 1, dans lequel l'embouchure (3) est montée coulissante sur le corps (2), et dans lequel le couplage mécanique (11) réagit à un geste de l'utilisateur visant à faire coulisser l'embouchure (3) par rapport au corps (2).

6. Combiné (1) selon la revendication 5, dans lequel le couplage mécanique (11) comprend un pignon (14) monté rotatif dans le corps (2), une première crémaillère sur une partie de l'embouchure (3) adjacente au corps (2) et en prise avec le pignon (14), et une deuxième crémaillère (110) en prise avec le pignon (14) et fixe par rapport à l'antenne (9).

7. Combiné (1) selon la revendication 6, dans lequel la deuxième crémaillère (110) est souple et pénètre dans une extrémité dudit canal (8), et dans lequel ladite une extrémité est adjacente au pignon (14), de sorte que la deuxième crémaillère (110) est confinée par le canal (8) pour éviter le cambrage de la deuxième crémaillère (110).

8. Combiné (1) selon l'une quelconque des revendications précédentes, dans lequel le canal (8) est tubulaire et fixé au corps (2), et l'antenne (9) est de type tige et montée coulissante dans une extrémité du canal tubulaire (8).
